# EUROPEAN PATENT SPECIFICATION

(11) **EP 0 937 276 B1**
(45) Date of publication and mention of the grant of the patent: **02.04.2003**
(21) Application number: 97911149.9
(22) Date of filing: 04.10.1997
(51) Int. Cl.: G02C 1/06

(54) **SPECTACLES**
BRILLE
LUNETTES

(30) Priority: 05.11.1996 DK 9600386 U
(43) Date of publication of application: 25.08.1999
(73) Proprietor: FN Optik A/S, 6700 Esbjerg (DK)
(72) Inventor: NIELSEN, Finn, DK-6710 Esbjerg (DK)
(74) Representative: Larsen, Hans Ole
(86) International application number: DK9700501
(87) International publication number: WO98020386

(56) References cited:
- US-A- 4 340 282
- US-A- 5 400 089

## Description

### Field of the invention

This invention concerns spectacles which comprise a frame with two lenses which are mutually connected by a bridge, and where each of which has a side bar which is pivotably mounted on the frame by means of a hinge, where the frame comprises rims which at least partly surround each their lens, and where the radial inner side of the rims has a projection, and around the edge of the lenses there is a recess which accommodates the projection in an enclosing manner.

### Known technique

Spectacles of the kind described in the introduction are known from US patent publication 5,400,089, where the frame consists of a solid and strong material which not only gives the spectacles considerable weight but also results in a somewhat heavy, clumsy and an altogether unattractive appearance. With the known spectacles, the frame also surrounds the rims and lenses, around the edges of which there is a recess to accommodate and surround a projection on the radial inner side of the rims.

There are also known more elegant solutions, where the spectacle frame consists of a thin metal wire which is wrapped around the lenses in one piece. Spectacles having a frame which consists solely of a thin wire are given a light and elegant appearance.

### The technical problem which needs to be solved

The known technique is, however, inexpedient, in that with the view to securing the lenses in a reliable manner, the frame wire must be tightened very strongly around the rims and the lenses in order to provide spectacles which are sufficiently rigid. During this tightening, the wire is inclined to slide over the edge of the rims, the result being that the rims with the lenses fall out of the frame. The same thing can happen during use if the spectacles are exposed to an unintentional influence in the form of shock or a twisting of the frame. A strong tightening of the wire can also result in a splitting of the rims by the oppositely-directed radial forces between the wire and the lenses.

### The object of the invention

It is therefore the object of the present invention to provide an improved configuration of the spectacles described in the preamble, where the frame wire can not slide out over the edge of the rims and the lenses, and where at the same time there is achieved very rigid spectacles with a light and elegant appearance, and where the rims are not exposed to splitting forces.

### The new technique

The novelty aspect of the invention as defined in claim 1 is that the frame consists of a wire which extends around each lens and the associated rim, and that in the position of use the wire is embedded in an enclosing manner in a recess around the radial outer side of the rim.

### The technical effect

By using the aforementioned known technique in connection with the new technique, the wire is effectively embedded in the radial outer side of the rims and is hereby prevented from sliding out over the edge of the rims. At the same time, the influence of the splitting forces on the rim and the lenses are reduced to a considerable degree. This has the advantage that the wire can be tightened more strongly around the lens without any risk of damage to the lens or the rim. This makes it possible for the frame to be more rigid and more robust than hitherto known.

It is advantageous, as disclosed in claim 2, for the rim to consist of relatively soft material, such as aluminium, which in addition is suitable for colouring by anodization.

### The drawing

The details of the invention will now be described with reference to the figures in the drawing, where
- fig. 1: is a perspective view of the spectacles according to the invention,
- fig. 2: shows a part section of the spectacles according to the invention indicated by the line II-II in fig. 1, and
- fig. 3: shows a part section of known spectacles corresponding to that shown in fig. 2.

### Description of an example embodiment

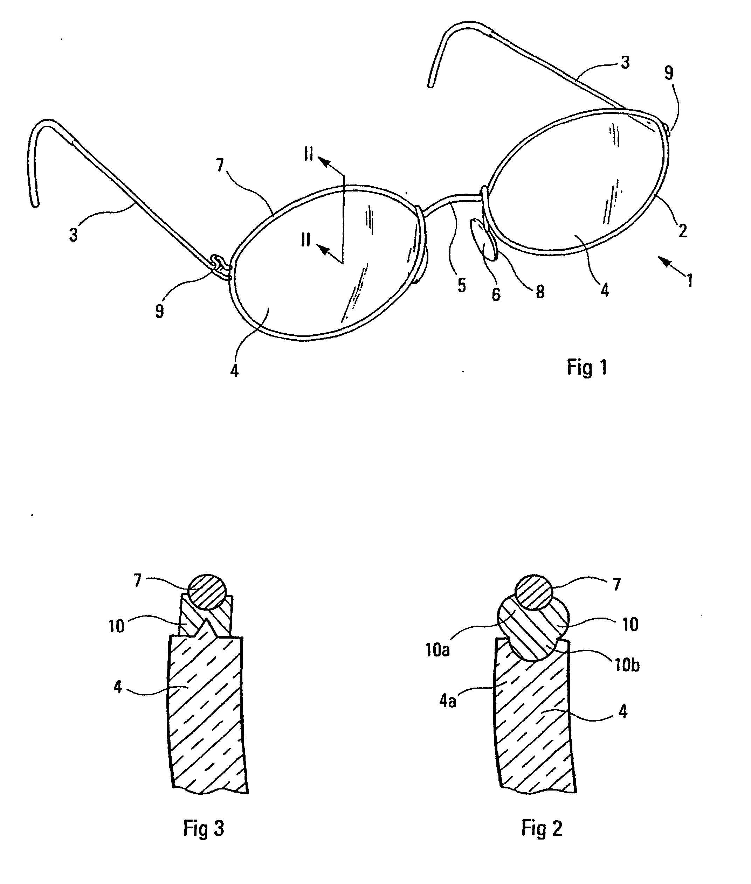

In fig. 1 is shown a pair of spectacles 1 according to the invention.

The spectacles 1 comprise a frame 2, two side bars 3 and two lenses 4 which are connected across a bridge 5. Two nose-pads 6 are provided between the lenses 4.

The lenses 4 can consist of glass, but in the preferred embodiment they are of plastic, in that the lenses 4 can hereby be of a very low intrinsic weight, which makes the spectacles 1 more comfortable to wear.

The frame 2, the side bars 3 and the bridge 5 are formed by a wire 7 of metal which is suitable for the purpose, for example titanium.

In the formation of the frame 2, the wire 7 extends from a first loop 8 around a pin (not shown in the drawing) on the rear of the one nose-pad 6, upwards and transversely over and around the one end of the bridge 5, from here down along the edge of the one lens 4 and around the edge of this and up and over to the bridge 5, in that the wire 7 opposite the side bar 3 forms a first hinge loop 9 with a pin part for the hinging of the first side bar 3 to the frame 2.

The wire 7 extends further in a slight arc, which constitutes the bridge 5, across to the second lens 4, where in a corresponding manner the wire continues around the second lens 4 and returns up and transversely over the other end of the bridge 5 and down in a second loop 8 around a pin (also not shown) on the rear of the second nose-pad 6. In this further extension, the wire similarly forms a second hinge loop 9 for the hinging of the second side bar 3 to the frame 2.

A rim 10 is disposed between the wire 7 and the lenses 4, said rim 10 according to the invention having a cross-section as shown in fig. 2. In the position of use, on the radial outer side of the rim 10 and extending along this rim there is a recess 10a which accommodates the wire 7 in an enclosing manner.

On the opposite side of the rim 10, i.e. in the position of use on and extending along the radial inner side of the rim, there is provided a projection 10b, in that this projection 10b is preferably configured as part of a circular arc.

In order to ensure the correct position of the lenses 4 in the rim 10, the edge of the lenses 4 are provided with a recess 4a extending along their edges, in that this recess 4a is configured to accommodate the projection 10b on the rim.

In fig. 3 is shown a known embodiment for a pair of spectacles of the kind described in the preamble, where the lens 4 is configured in a known manner with a protruding edge which is conical in cross-section. It will be immediately apparent that the conical edge of the lens 4 serves as a wedge which, under the force which is exercised by the wire 7, contributes towards the splitting of the rim 10, especially when the rim 10 is made of plastic.

The rim 10 can be of different lengths, all depending on requirements. Thus in a first embodiment the rim 10 can extend from the first end of the underside of the bridge 5, down and around the first lens 4 and along the top of the lens 4 to the bridge 5, further along the underside of this and along the top of the second lens 4, around this lens and further to the second end of the underside of the bridge 5 where it ends.

In a second embodiment, the rim extends for only a part of the aforementioned extension, in that in such case the rim 10 starts at the first hinge part 9, extends under the bridge 5 and ends at the second hinge loop 9.

The rim in the first and the second embodiment is formed from a single piece of material.

The side bars 3 have a hinge part which is configured as an integral part of the side bars, in that these are bent at a distance from their end points to form a surrounding part which consists of two oppositely-wound windings which surround the aforementioned pin parts in the hinge loops 9.

## Claims

1. Spectacles which comprise a frame (1) with two lenses (4) which are mutually connected by a bridge (5), and wherein each has a side bar (3) which is pivotably mounted on the frame (1) by means of a hinge (9), wherein the frame (1) comprises rims (10) which at least partly surround each of the lenses (4), and wherein the radial inner side of the rims (10) has a projection (10b), and wherein around the edges of the lenses (4) there is a recess (4a) which accommodates the projection (10b) in an enclosing manner, said spectacles being **characterized in that** the frame (1) consists of a wire (7) which extends around each of the lenses (4) and the associated rim (10), and that the wire (7) is accommodated in an enclosed manner within a recess (10a) extending around the radial outer side of the rim (10) in the position of use.

2. Spectacles according to claim 1, **characterized in that** the rim (10) consists of a relatively soft material such as aluminium.

## Patentansprüche

1. Brille enthaltend einen Rahmen (1) mit zwei Brillengläser (4), die gegenseitig mit einer Brücke (5) verbunden sind, und wobei jedes Brillenglas einen seitlichen Stab (3) aufweist, der an dem Rahmen (1) mittels eines Gelenkes (9) gelenkig verbunden ist, wobei der Rahmen (1) Ränder (10) enthält, die jede der Brillengläser (4) wenigstens teilweise umgeben und wobei die radial gesehen innere Seite der Ränder (10) einen Vorsprung (10b) aufweist und wobei entlang der Kanten der Brillengläser (4) eine Ausnehmung (4a) vorhanden ist, die den Vorsprung (10b) aufnimmt, wobei die Brille **dadurch gekennzeichnet ist, dass** der Rahmen (1) aus einem Draht (7) gebildet ist, der sich um jedes der Brillengläser (4) und den damit verbundenen Rand (10) erstreckt und dass der Draht (7) in der Gebrauchsposition von einer sich um die radial gesehen äußere Seite des Randes (10) erstreckenden Ausnehmung (10a) aufgenommen ist.

2. Brille nach Anspruch 1, **dadurch gekennzeichnet, dass** der Rand (10) aus einem relativ weichen Material wie Aluminium gebildet ist.

## Revendications

1. Lunettes qui comprennent une monture (1) avec deux verres (4) qui sont mutuellement reliés par un pont (5), et dans lesquelles chaque côté comporte une branche (3) qui est fixée de façon pivotante sur la monture (1) au moyen d'une charnière (9), dans lesquelles la monture (1) comprend des bordures (10) qui entourent au moins en partie chacun des verres (4), dans lesquelles le côté intérieur radial des bordures (10) présente une saillie (10b), et dans lesquelles, autour des bords des verres (4), il est prévu un logement (4a) qui reçoit la saillie (10b) de manière à l'entourer, lesdites lunettes étant **caractérisées en ce que** la monture (1) consiste en un fil (7) qui s'étend autour de chacun des verres (4) et de la bordure associée (10), et **en ce que** le fil (7) est reçu d'une manière enfermée dans un logement (10a) s'étendant autour du bord extérieur radial de la bordure (10) dans la position d'utilisation.

2. Lunettes selon la revendication 1, **caractérisées en ce que** la bordure (10) est en une matière relativement tendre, telle que l'aluminium.
